# EUROPEAN PATENT SPECIFICATION

(11) **EP 0 491 535 B1**
(45) Date of publication and mention of the grant of the patent: **25.02.1998**
(21) Application number: 91311646.3
(22) Date of filing: 16.12.1991
(51) Int. Cl.: C08L 81/02, C08K 5/15, C08K 7/14, C08G 75/02

(54) **Process for the preparation of polyarylene sulfide resin composition excellent in adhesion**
Verfahren zur Herstellung von Polyarylensulfidharzzusammensetzungen mit ausgezeichnetem Haftvermögen
Procédé pour la préparation de compositions de résine de polysulfure d'arylene ayant une excellente adhésion

(30) Priority: 17.12.1990 JP 402708/90
(43) Date of publication of application: 24.06.1992
(73) Proprietor: POLYPLASTICS CO. LTD., Chuo-Ku Osaka-shi Osaka 541 (JP)
(72) Inventor: Serizawa,, Hagime, Shizuoka (JP); Kubota, Masaru, Shizuoka (JP)
(74) Representative: W.P. THOMPSON & CO.

(56) References cited:
- EP-A- 0 096 122
- EP-A- 0 360 544
- EP-A- 0 388 971
- EP-A- 0 447 668

## Description

The present invention relates a process for the preparation of to a polyarylene sulfide resin composition improved in adhesion.

More particularly, the present invention relates to a process in which a polyarylene sulfide resin composition which is excellent in its adhesion to an adhesive is prepared by blending a polyarylene sulfide resin with N-[4-(2,3-epoxypropoxy)-3,5-dimethylbenzyl] acrylamide and/or N-diallylaminoepoxypropane, a radical initiator and, if necessary, a filler.

A demand has recently arisen for a thermoplastic resin which has high heat resistance and chemical resistance and excellent flame retardance for use in the manufacture of components of electrical or electronic appliances, automobile parts and chemical instruments or for other functional parts.

Polyarylene sulfide resins represented by polyphenylene sulfide are one of the resin types which have been provided to satisfy this demand is relatively inexpensive when account is taken of their physical properties, so that the demand therefor has increased.

Although polyarylene sulfide resins are excellent in chemical resistance, heat resistance, flame retardance and mechanical strength, they have the disadvantage of being poor in their adhesion to an adhesive or a coating, so that when an article made by adhesive-bonding of two or more mouldings composed of a polyarylene sulfide resin to each other is produced, the adhesive-bonded mouldings are liable to separate from each other or that a coating applied to a moulded article of the said resin is liable to peel off. Accordingly, the application of the resin to such fields is limited. Although addition of a hydrophilic graft or block copolymer which is compatible with a polyarylene sulfide resin to a polyarylene sulfide resin has been proposed as a means for improving the adhesion of a coating or the like to a moulded article of the resin (see Japanese Patent Laid-Open No. 200166/1986), still further improvement in the adhesion is desirable.

It is the object of the present invention to improve the adhesion of polyarylene sulfide resins.

It has now been found that this object can be achieved by the incorporation, in a particular way of a compound having a particular functional group reactive with an adhesive. Thus a process has now been found in which a moulding material which is excellent in adhesion and is practically usable is prepared by melt-kneading a polyarylene sulfide resin with N-[4-(2,3- epoxypropoxy)-3,5-dimethylbenzyl] acrylamide and/or N-diallylaminoepoxypropane and a radical initiator.

The present invention provides a process for the preparation of a polyarylene sulfide resin composition, characterised by melt-kneading under heat for at least 30 seconds a mixture comprising
(A) a polyarylene sulfide resin with for each 100 parts by weight of said resin, 0.1 to 15 parts by weight of
(B) at least one of N-[4-(2,3-epoxypropoxy)-3,5-dimethylbenzyl] acrylamide and N-diallylaminoepoxypropane and 0.1 to 10% by weight based on the component (B) of
(C) a radical initiator.

Optionally the melt-kneaded mixture further contains for each 100 parts by weight of component (A) 0 to 400, preferably 0 to 250, parts by weight of
(D) one or more fillers selected from fibrous, powdery and flaky fillers.

The polyarylene sulfide resin to be used in the present invention as the component (A) is one mainly constituted of repeating units represented by the formula: -(Ar - S)- (wherein Ar is an arylene group).

Examples of the arylene group include p-phenylene, m-phenylene, o-phenylene and substituted phenylene groups (wherein the substituent is an alkyl group preferably having 1 to 5 carbon atoms or a phenyl group), p,p'-diphenylene sulfone, p,p'-biphenylene, p,p'-diphenylene ether, p,p'-diphenylenecarbonyl and naphthalene groups.

Particularly, a substantially linear homopolymer composed of p-phenylene sulfide repeating units is preferably used.

Although an arylene sulfide homopolymer constituted of the same repeating units among the arylene sulfide groups described above may be used in the present invention, the use of a copolymer constituted of a plurality of repeating units different from each other is preferable in some cases in respect of the processability of the resulting composition.

The copolymer to be used in the present invention may be any one constituted of two or more repeating units different from each other selected from among the arylene sulfide units mentioned above.
Preferably, a copolymer comprising p-phenylene sulfide units as a major component together with m-phenylene sulfide units is used. To achieve suitable heat resistance, mouldability and mechanical characteristics it is preferable to use a substantially linear copolymer comprising at least 60 mole %, still preferably at least 70 mole % of p-phenylene sulfide units. Further, it is preferable that the copolymer contain 5 to 40 mole %, more preferably 10 to 25 mole % of m-phenylene sulfide units.

Among such copolymers, a block copolymer (for example, one disclosed in Japanese Patent Laid-Open No.14228/1986) is preferred to a random one, because the former is superior to the latter in processability, heat resistance and mechanical properties.

Although the polyarylene sulfide resin to be used in the present invention as the component (A) may be either a relatively low-molecular linear polymer or a polymer improved in its processability in moulding by crosslinking such a relatively low-molecular linear polymer oxidatively or thermally to increase its melt viscosity, it may also be a substantially linear high-molecular polymer prepared by the polycondensation of a monomer component mainly comprising a difunctional monomer. In many cases, the latter linear polymer is superior to the former in respect of the physical properties of the resulting moulded article.

Further, a crosslinked polyarylene sulfide resin prepared from a monomer having at least three functional groups as a part of the monomer component or a blend of the above linear polymer with such a crosslinked polyarylene sulfide resin as well as the polymers described above can be suitably used in the present invention.

The present invention is characterised by using as the component (B) N-[4-(2,3-epoxypropoxy)-3,5-dimethylbenzyl] acrylamide or N-diallylaminoepoxypropane, or a mixture of both compounds.

The component (B) is used in an amount of 0.1 to 15 parts by weight, preferably 1 to 10 parts by weight per 100 parts by weight of the polyarylene sulfide resin [component (A)]. The amount of the component (B) to be added varies depending upon the nature of the component (B) and the application field of the resulting composition. If the amount is too small, the adhesion will hardly be improved, while if the amount is too large, the resulting composition will give rise to difficulties in moulding the processing or bleedout owing to its too high melt viscosity.

The addition of the radical initiator (C) is necessarily an essential component in the present invention for effectively improving the adhesion of the composition. Although the radical initiator (C) may be any one selected from among azo and peroxide initiators, it is suitable to use a radical initiator having a relatively high decomposition temperature, i.e., one having a one-minute half-life temperature of 130°C or above, preferably 150°C or above. Although the radical initiator preferred from this standpoint varies depending upon the nature of the component (B) and melt-kneading temperature, it generally includes 2,5-dimethylhexane 2,5-dihydroperoxide, di-t-butyl peroxide, t-butyl cumyl peroxide, 2,5-dimethyl-2.5-di(t-butylperoxy)hexane, 2,5-dimethyl-2,5-di(t-butylperoxy)hexyne-3, 2,3-dimethyl-2,3-diphenylbutane, 2,3-diethyl-2,3-diphenylbutane, 2,3-dimethyl-2,3-di(p-methylphenyl)butane and 2,3-dimethyl-2,3-di(bromophenyl)butane.

The radical initiator (C) is used in an amount of 0.1 to 10% by weight based on the compound used as the component (B). This is in order to improve the adhesion. Although the amount of the radical initiator to be added varies depending upon the nature of the initiator and the application field of the resulting composition, the use thereof in too large an amount is unfavorable because the resulting composition will expand in melt molding and thus cause difficulties to arise.

Although the filler (D) is not necessarily an essential component in the present invention, the use thereof is preferable for producing a molded article which is excellent in mechanical strength, heat resistance, dimensional stability, electrical properties and other performances. The filler (D) may be selected from among fibrous, powdery and flaky ones depending upon the object.

The fibrous filler may be, for example, an inorganic fibrous material, for example, glass fiber, asbestos fiber, carbon fiber, silica fiber, silica/alumina fiber, zirconia fiber, boron nitride fiber, silicon nitride fiber, boron fiber and potassium titanate fiber, and fibers of metals such as stainless steel, aluminum, titanium, copper or brass. Among them, glass fiber and carbon fiber are most representative. Further, the fibrous filler includes high-melting organic fibrous materials, for example, polyamides, fluororesins and acrylic resins.

The powdery filler may be, for example, carbon black, silica, quartz powder, glass bead, glass powder, silicates such as calcium silicate, aluminum silicate, kaolin, talc, clay, diatomaceous earth and wollastonite; metal oxides such as iron oxide, titanium oxide and alumina; metal carbonates such as calcium carbonate and magnesium carbonate; metal sulfates such as calcium sulfate and barium sulfate; silicon carbide, silicon nitride, boron nitride and various metal powders.

The flaky filler may be, for example, mica, glass flake and various metal foils.

The inorganic fillers may be used alone or as a mixture of two or more of them. The simultaneous use of a fibrous filler, particularly glass or carbon fiber with a powdery or flaky filler is particularly effective in producing an article which is excellent both in mechanical strengths and in dimensional accuracy and electrical properties.

The amount of the filler, e.g. inorganic filler, is at most 400 parts by weight per 100 parts by weight of the resin (A). If the amount exceeds 400 parts by weight, the resulting composition will be poor in its processability in moulding and in the toughness of the moulded article. The use thereof in an amount of 250 parts by weight or below is particularly preferable.

Although the composition of the present invention can be prepared by various known processes, a mixture comprising at least the components (A), (B) and, (C) must be melt-kneaded under heat for at least 30 seconds. The component (D) and other components may be added either in this heat melting-kneading step together with the above components or in other steps. For example, the composition can be prepared by homogeneously mixing the components (A), (B), (C) and (D) together with a mixing machine such as a tumbler or Henschel mixer and melt-kneading the obtained mixture with a single- or twin-screw extruder to obtain pellets. In this preparation, it is preferable to employ a process which comprises preliminarily preparing a solution of the components (B) and (C), adding this solution to the component (A) of a powdery state, drying the obtained mixture, and subjecting the resulting mixture to the above melt-kneading. This process is particularly effective in homogeneously dispersing the component (C) which is used in a small amount according to the present invention to further improve the adhesion. The component (D) may be added either in the course of the above melt-kneading or thereafter.

The melt-kneading is preferably conducted at a temperature higher than the melting point of the resin component by 5 to 100°C, more preferably 10 to 60°C. The melt-kneading at too high a temperature causes decomposition and abnormal reaction. Although the melt-kneading time varies depending upon the kneading temperature or the kind or amount of the components (B) and (C), it is at least 30 seconds and preferably up to 15 minutes, most preferably 1 to 10 minutes.

Whilst not wishing to be bound by any theory by which the adhesion of a polyarylene sulfide resin is improved according to the present invention, it is believed that the polyarylene sulfide resin is bonded to the compound (B) by the action of the radical initiator to thereby improve the adhesion.

The composition of the present invention may further contain conventional additives so far as the use thereof does not detract from the object of the present invention and examples thereof include antioxidant, heat stabilizer, lubricant, nucleating agent, ultraviolet absorber, coloring agent, mold release agent and so forth. Further, a small amount of other thermoplastic resin may be added to the composition as an auxiliary component. These additives may be added either during the melt kneading described above or in some other steps.

As described above, the polyarylene sulfide resin composition made by the process of the present invention is remarkably improved in its adhesion to an adhesive, particularly an epoxy adhesive without exerting any adverse effect on the mechanical characteristics and appearance of an article moulded from the composition.

The present invention will now be described in more detail by referring to the following Examples, though it is not limited by them.

### Examples 1 to 6 and Comparative Examples 1 to 4

3 parts by weight of N-(4-(2,3-epoxypropoxy)-3,5-dimethylbenzyl)acrylamide (AXE) and a preliminarily prepared 10% acetone solution of 2,3-dimethyl-2,3-diphenylbutane (R-1) were added to 100 parts by weight of a polyphenylene sulfide polymer (PPS) (m.p.: 285°C, viscosity: 500 P as determined at 310°C and a shear rate of 1200 sec⁻¹). The acetone was removed from the obtained mixture, if necessary, followed by the addition of a glass fiber (chopped strand having a diameter of 10 µm and a length of 3 mm). The obtained mixture was premixed in a Henschel mixer for 5 minutes and melt-kneaded with an extruder at a cylinder temperature of 310°C (residence time: about 2 minutes) to give pellets of a polyarylene sulfide resin composition having a formulation specified in Table 1.

The pellets were molded into a test piece for the ASTM tensile test with an injection molding machine at a cylinder temperature of 310°C and a mold temperature of 150°C. This piece was subjected to the tensile test and the adhesion test. The adhesive strength was determined by the following method.

The test piece for the ASTM tensile test was cut into halves. The both were sufficiently washed with acetone and bonded to each other with an epoxy adhesive (a product of Konishi K.K., Konishi bond E 30H) with an overlap length of 8 mm. The bonded test piece was treated at 120°C for one hour to cure the adhesive and allowed to stand in an atmosphere at 23°C and 50% humidity for one day. Thereafter, the test piece was subjected to the tensile test and examined for adhesive strength under shear.

The results are given in Table 1.

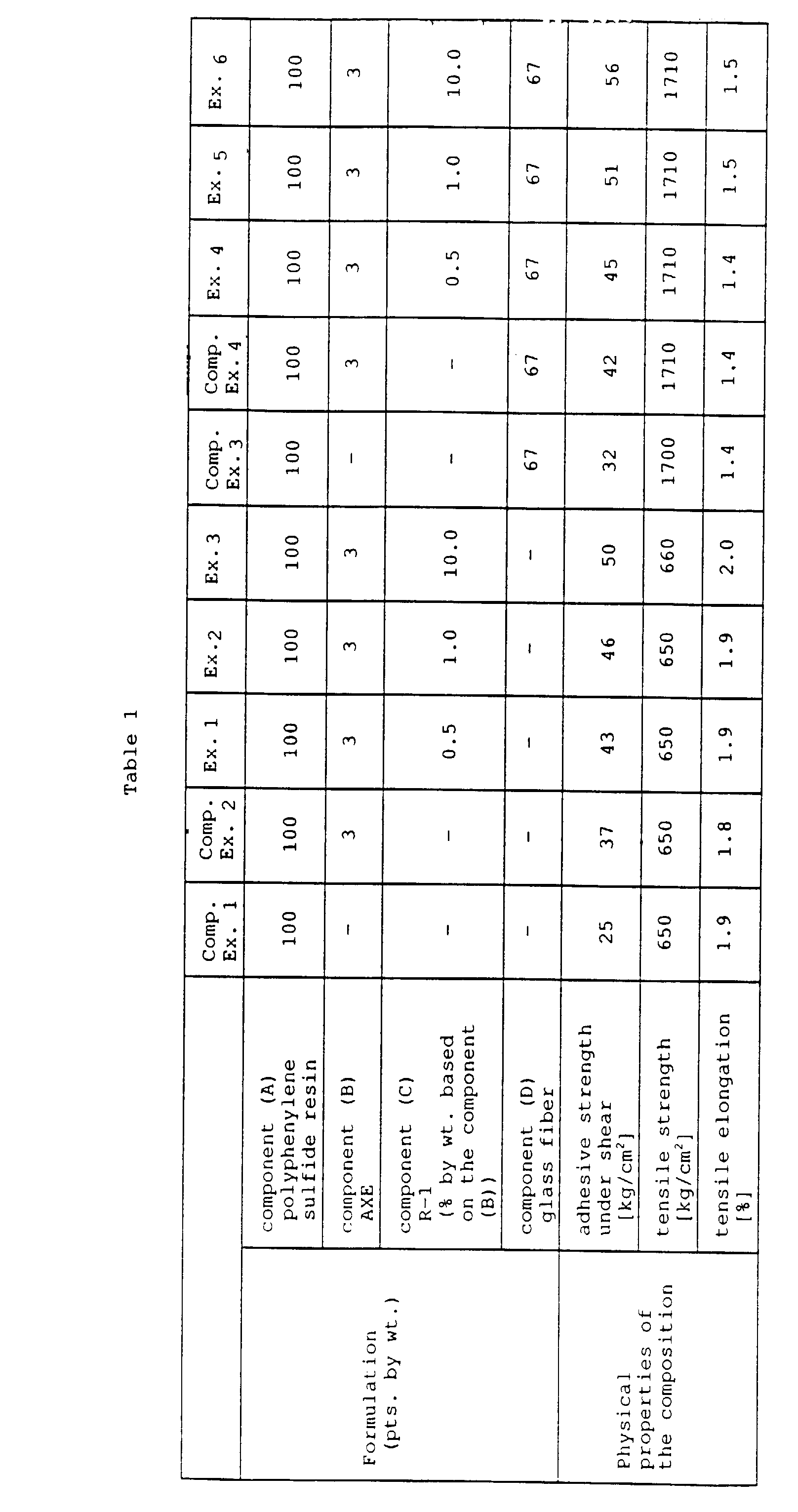

### Examples 7 to 10 and Comparative Example 5.

The same procedure as that of each of the foregoing Examples was repeated except that the PPS polymer, AXE and R-1 were used in a ratio specified in Table 2. Comparative Example 5 where component (C) is omitted is also shown.

The results are given in Table 2.

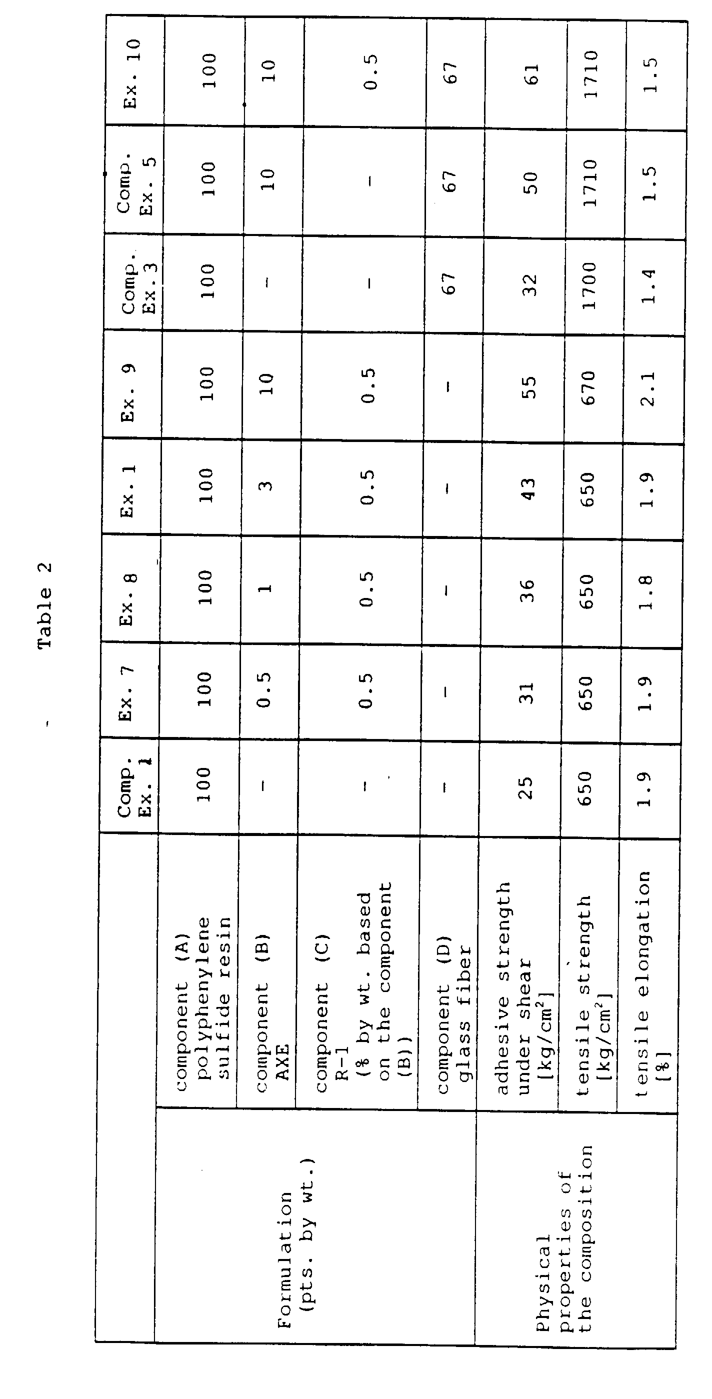

### Examples 11 to 16

The same procedure as that of the Example 1 or 4 was repeated except that the "R-1" used as the component (C) was replaced by 2,5-dimethyl-2,5-di(t-butylperoxy)hexyne-3 (R-2), 2,5-dimethyl-2,5-di(t-butylperoxy)hexane (R-3) or 2,5-dimethylhexane 2,5-dihydroperoxide (R-4).

The results are given in Table 3.

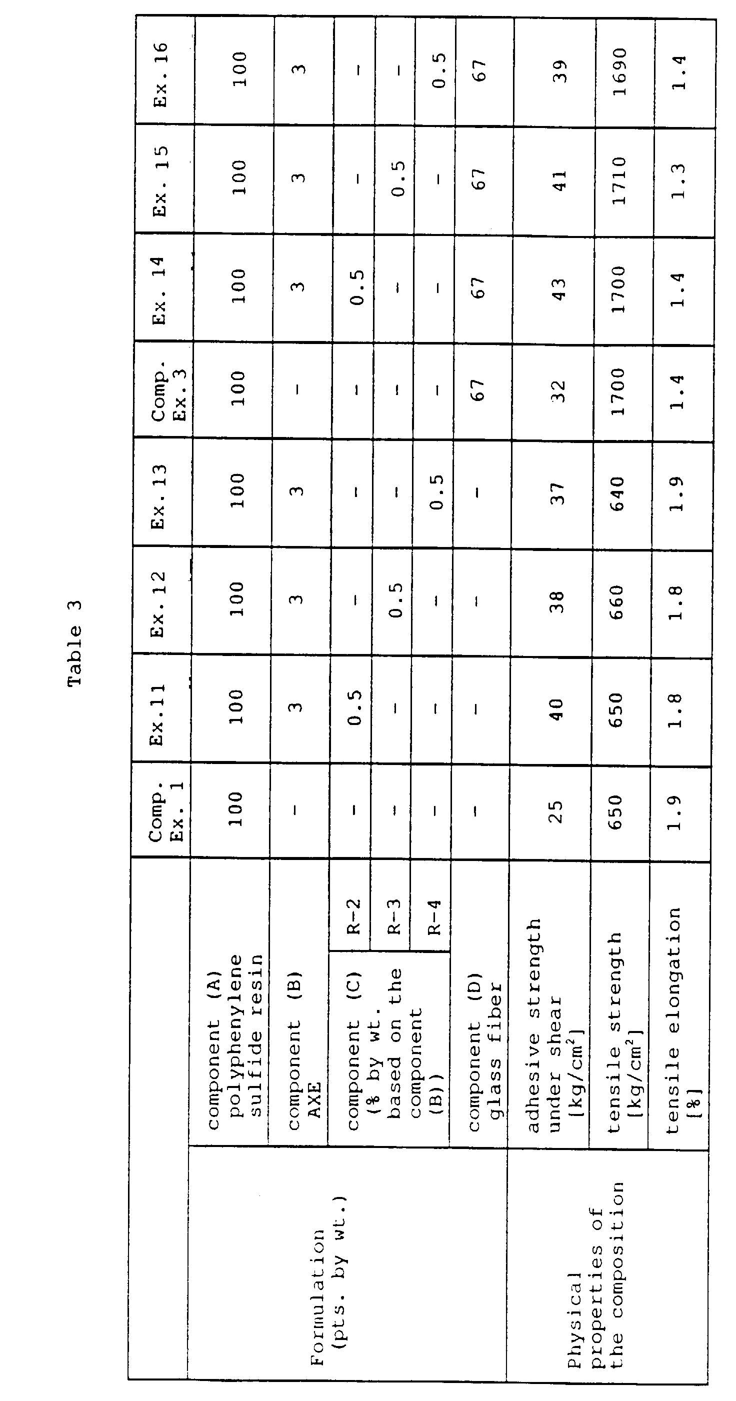

### Examples 17 and 18 and Comparative Examples 6 to 9

The same procedure as that of each of the foregoing Examples was repeated except that N-diallylaminoepoxypropane was used as the component (B) instead of the "AXE" at a ratio specified in Table 4. Comparative Examples 6 to 9 where glycidyl methacrylate was used as the component (B) are also shown.

The results are given in Table 4.

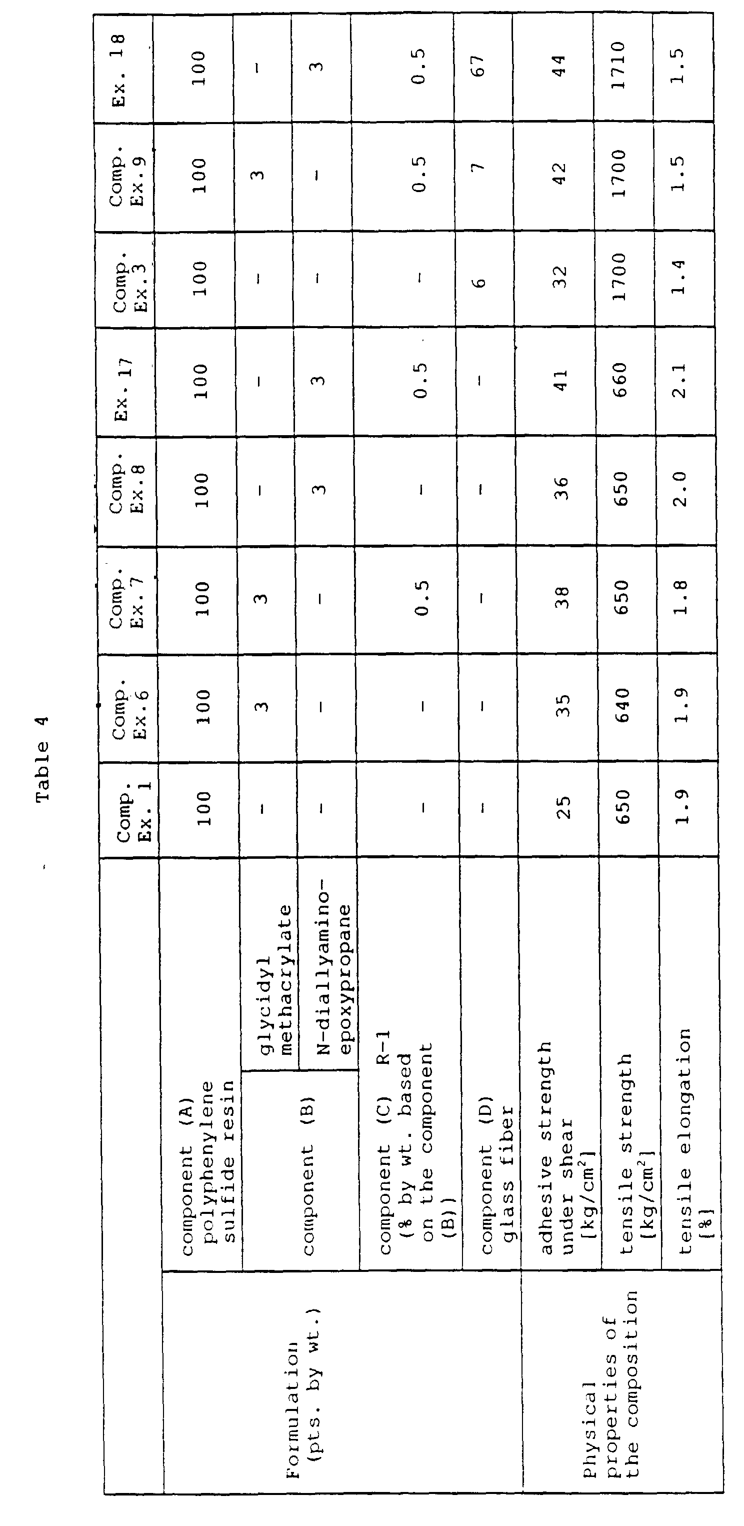

## Claims

1. A process for the preparation of a polyarylene sulfide resin composition, characterised by melt-kneading under heat for at least 30 seconds a mixture comprising
(A) a polyarylene sulfide resin with for each 100 parts by weight of said resin, 0.1 to 15 parts by weight of
(B) at least one of N-[4-(2,3-epoxypropoxy)-3,5-dimethylbenzyl] acrylamide and N-diallylaminoepoxypropane and 0.1 to 10% by weight based on the component (B) of
(C) a radical initiator.

2. A process according to claim 1, in which the melt-kneaded mixture further contains for each 100 parts by weight of component (A) 0 to 400, preferably 0 to 250, parts by weight of
(D) one or more fillers selected from fibrous, powdery and flaky fillers.

3. A process according to claim 2, in which component (D) comprises a fibrous filler and a flaky filler.

4. A process according to any preceding claim, in which component (A) is mainly constituted by -(Ar-S)- repeating units in which Ar is an arylene group selected from p-phenylene, m-phenylene, o-phenylene, substituted phenylene wherein the substituent is an alkyl group or a phenyl group, p,p'-diphenylene sulfone, p,p'-biphenylene, p,p'-diphenylene ether, p,p'-diphenylenecarbonyl and naphthalene groups.

5. A process according to claim 4, in which component (A) is a substantially linear homopolymer composed of p-phenylene sulfide repeating units.

6. A process according to claim 4, in which component (A) is a copolymer comprising p-phenylene sulfide units as a major component and m-phenylene sulfide units as a minor component.

7. A process according to claim 6, in which the melt-blended mixture comprises at least 60 mole %, preferably at least 70 mole %, of p-phenylene sulfide units and 5 to 40 mole %, preferably 10 to 25 mole %, m-phenylene sulfide units.

8. A process according to any of claims 1 to 3, in which component (A) comprises a polyarylene sulfide resin obtained from a monomer having at least three functional groups per molecule.

9. A process according to any preceding claim, in which component (C) is a radical initiator having a one-minute half-life temperature of 130°C or above, preferably 150°C or above.

10. A process according to any preceding claim, carried out at a temperature higher than the melting point of component (A) by 5 to 100°C, preferably 10 to 60°C.

11. A process according to any preceding claim carried out for no more than 15 minutes and preferably for 1 to 10 minutes.

## Patentansprüche

1. Verfahren zur Herstellung einer Polyarylensulfidharz-Zusammensetzung, das dadurch gekennzeichnet ist, daß man in der Wärme mindestens 30 s eine Mischung schmelzknetet, die umfaßt:
(A) ein Polyarylensulfidharz mit, auf jeweils 100 Gew.-Teile des Harzes, 0,1 bis 15 Gew.-Teilen von
(B) mindestens einer Verbindung unter N-[4-(2,3-Epoxypropoxy)-3,5-dimethylbenzyl]acrylamid und N-Diallylaminoepoxypropan, und 0,1 bis 10 Gew.-%, bezogen auf die Komponente (B), eines
(C) Radikalstarters.

2. Verfahren gemäß Anspruch 1, worin die schmelzgeknetete Mischung ferner, auf jeweils 100 Gew.-Teile der Komponente (A), 0 bis 400, vorzugsweise 0 bis 250 Gew.-Teile,
(D) eines oder mehrerer Füllstoffe, ausgewählt aus faserförmigen, pulverförmigen und flockenförmigen Füllstoffen enthält.

3. Verfahren gemäß Anspruch 2, worin die Komponente (D) einen faserförmigen Füllstoff und einen flockenförmigen Füllstoff umfaßt.

4. Verfahren gemäß einem der vorangehenden Ansprüche, worin die Komponente (A) hauptsächlich aus sich wiederholenden -(Ar-S)- Einheiten aufgebaut ist, worin Ar eine Arylen-Gruppe, ausgewählt aus p-Phenylen-, m-Phenylen-, o-Phenylen-, substituierten Phenylen-Gruppen, worin der Substituent eine Alkyl-Gruppe oder eine Phenyl-Gruppe ist, p,p'-Diphenylensulfon-, p,p'-Biphenylen-, p,p'-Diphenylenether-, p,p'-Diphenylencarbonyl- und Naphthalin-Gruppen ist.

5. Verfahren gemäß Anspruch 4, worin die Komponente (A) ein im wesentlichen lineares Homopolymer ist, das aus sich wiederholenden p-Phenylensulfid-Einheiten aufgebaut ist.

6. Verfahren gemäß Anspruch 4, worin Komponente (A) ein Copolymer ist, das p-Phenylensulfid-Einheiten als Hauptbestandteil und m-Phenylensulfid-Einheiten als Nebenbestandteil umfaßt.

7. Verfahren gemäß Anspruch 6, worin die schmelzgenetete Mischung mindestens 60 Mol-%, vorzugsweise mindestens 70 Mol-% p-Phenylensulfid-Einheiten und 5 bis 40 Mol-%, vorzugsweise 10 bis 25 Mol-% m-Phenylensulfid-Einheiten umfaßt.

8. Verfahren gemäß einem der Ansprüche 1 bis 3, worin die Komponente (A) ein Polyarylensulfidharz umfaßt, das aus einem Monomer mit mindestens 3 funktionellen Gruppe pro Molekül erhalten wurde.

9. Verfahren gemäß einem der vorangehenden Ansprüche, worin die Komponente (C) ein Radikalstarter mit einer Einminuten-Halbwertstemperatur von 130°C oder mehr, vorzugsweise 150°C oder mehr ist.

10. Verfahren gemäß einem der vorangehenden Ansprüche, das bei einer um 5 bis 100°C, vorzugsweise um 10 bis 60°C höheren Temperatur als der Schmelzpunkt der Komponente (A) ausgeführt wird.

11. Verfahren gemäß einem der vorangehenden Ansprüche, das nicht länger als 15 min und vorzugsweise 1 bis 10 min ausgeführt wird.

## Revendications

1. Un procédé pour la préparation d'une composition de résine polysulfure d'arylène, caractérisé par le malaxage à l'état fondu sous chauffage pendant au moins 30 secondes, d'un mélange comprenant
(A) une résine polysulfure d'arylène avec, pour 100 parties en poids de ladite résine, 0,1 à 15 parties en poids de
(B) au moins l'un du N-[4-(2,3-époxypropoxy)-3,5-diméthylbenzyl]acrylamide et du N-diallylaminoépoxypropane et 0,1 à 10 % en poids, par rapport au composant (B), de
(C) un initiateur de réaction radicalaire.

2. Un procédé selon la revendication 1, dans lequel le mélange malaxé à l'état fondu contient de plus, pour 100 parties en poids de composant (A), 0 à 400, de préférence 0 à 250, parties en poids de
(D) une ou plusieurs charges choisies parmi des charges fibreuses, pulvérulentes et lamellaires.

3. Un procédé selon la revendication 2, dans lequel le composant (D) comprend une charge fibreuse et une charge lamellaire.

4. Un procédé selon l'une quelconque des revendications précédentes, dans lequel le composant (A) est principalement constitué de motifs récurrents -(Ar-S)- où Ar est un groupe arylène choisi parmi les groupes p-phénylène, *m*-phénylène, *o*-phénylène, phénylène substitué dont le substituant est un groupe alkyle ou un groupe phényle, *p,p'*-sulfonylbisphényle, *p,p*'-diphénylène, *p,p*'-oxybisphényle, *p,p'*-carbonylbisphényle et naphtylène.

5. Un procédé selon la revendication 4, dans lequel le composant (A) est un homopolymère sensiblement linéaire constitué de motifs sulfure de p-phénylène récurrents.

6. Un procédé selon la revendication 4, dans lequel le composant (A) est un copolymère comprenant des motifs sulfure de p-phénylène comme constituant principal et des motifs sulfure de m-phénylène comme constituant secondaire.

7. Un procédé selon la revendication 6, dans lequel le mélange malaxé à l'état fondu comprend au moins 60 mol %, de préférence au moins 70 mol %, de motifs sulfure de p-phénylène et 5 à 40 mol %, de préférence 10 à 25 mol %, de motifs sulfure de m-phénylène.

8. Un procédé selon l'une quelconque des revendications 1 à 3, dans lequel le composant (A) comprend une résine polysulfure d'arylène obtenue à partir d'un monomère ayant au moins trois groupes fonctionnels par molécule.

9. Un procédé selon l'une quelconque des revendications précédentes, dans lequel le composant (C) est un initiateur de réaction radicalaire dont la température de demi-vie de 1 minute est de 130°C ou plus, de préférence 150°C ou plus.

10. Un procédé selon l'une quelconque des revendications précédentes, exécuté à une température supérieure de 5 à 100°C, de préférence 10 à 60°C, au point de fusion du composant (A).

11. Un procédé selon l'une quelconque des revendications précédentes, exécuté pendant au plus 15 minutes et de préférence pendant 1 à 10 minutes.
